# NEW EUROPEAN PATENT SPECIFICATION

(11) **EP 1 114 780 B2**
(45) Date of publication and mention of the opposition decision: **03.09.2008**
(45) Mention of the grant of the patent: 30.03.2005
(21) Application number: 00870003.1
(22) Date of filing: 07.01.2000
(51) Int. Cl.: B65D 41/26, B29C 69/00

(54) **One-piece dosing cap**
Einteiliger Dosierverschluss
Bouchon doseur monobloc

(43) Date of publication of application: 11.07.2001
(73) Proprietor: THE PROCTER & GAMBLE COMPANY, Cincinnati, Ohio 45202 (US)
(72) Inventor: Jacobs, Andre Marie Gustaf, 1982 Zemst (Elewijt) (BE)
(74) Representative: Engisch, Gautier

(56) References cited:
- EP-B- 0 167 783
- EP-B- 0 205 656
- EP-B- 0 647 197
- WO-A-96/24483
- WO-A-97/02190
- WO-A-97/15506
- DE-A- 2 731 983
- DE-C- 871 963
- JP-A- 9 255 015
- US-A- 3 118 562
- US-A- 4 011 961
- US-A- 4 566 508
- US-A- 4 875 600
- US-A- 5 407 377
- US-A- 6 003 728

## Description

### Field of the invention

The present invention relates to dosing caps, typically those which are used to dose home care or fabric care products.

### Background of the invention

Plastic dosing caps for dosing treatment compositions in a dish or laundry washing solution are representative of the various dosing caps to which the present invention can apply. Typically, such dosing caps comprise a main dosing compartment, which is typically in the shape of a cylinder, closed at the top by a top wall. This dosing compartment is surrounded by an external skirt, extending outwardly therefrom, which is provided with screw threads or other means for releasably securing said dosing cap onto the neck of a container, for example a bottle. Such dosing caps are very easily manufactured by a injection molding process because they are typically made out of a thermoplastic resin, for example a polyethylene or a polypropylene.

In such an injection molding process, the mold comprises at least two parts: a first half which defines the outer surface of the cap, including the top wall. The other half acts like a plug into the first outer half, and defines the inner surfaces of the cap. At the time the cap has been molded, the inner half of the mold is fitting into the outer half, but it then needs to be extracted therefrom, so that the mold can be opened, and the molded cap can be ejected therefrom. For the cap to be properly ejected, it is preferable that the dosing compartment be slightly conical, so that the inner half of the injection mold can slide out of the outer half during the opening movement of the mold. At least, said dosing compartment cannot present any undercut, or as a maximum, a very limited undercut, which will allow the movable portion of the mold to slide therefrom by using the properties of flexibility of the thermoplastic material.

In addition to the above first limitation, there is a second limitation in the shape and dimensions of the dosing compartment. For a given screwing diameter of the cap, the external diameter of the dosing compartment cannot exceed a certain value, because there must be sufficient space between the screwthreads and the external surface of the dosing compartment. So for a given screwing diameter of the dosing cap, the internal diameter of the dosing compartment is limited and all the sections along the height of the dosing compartment must be smaller than the first section at the bottom of said dosing compartment (at the mouth of the dosing compartment).

Given the above limitations, three solutions are typically available in the prior art. Most often, a first solution to increase the dosing volume without creating an undercut is to increase the height of the dosing cylinder, which means increasing the global height of the dosing cap. However, this solution has a major disadvantage: the containers will require more space on the shelves, and the shelf cost per unit will be increased, which has a direct influence on the selling price of the product, thus being clearly undesirable to the consumer. Alternatively, to increasing the height of the top portion of the cap, it is possible to increase the dosing volume by increasing the length of the dosing portion which is hanging into the bottle. However, with this solution, the mouth of the dosing cylinder is constantly hanging into the product: so, when the consumer opens the bottle, the dosing portion of the cap is always dripping with product, which makes the whole package look messy, and is thus particularly undesirable.

A second solution known from the prior art consists in molding the cap into two separate parts which are then assembled. The first part comprises the base portion of the turret together with the skirt and its attaching means. The other part which is molded separately comprises the top portion of the dosing cylinder with its top wall. The top portion of the dosing cylinder can be designed with a greater diameter than the base portion, as long as it does not itself comprise an undercut. Then, both parts are assembled, and the final dosing cap comprises an undercut which could not have been molded in a single step injection molding process. However, making the cap into two separate parts and then assembling them is a very expensive solution to the problem of molding a cap that comprises an undercut. Indeed, this requires double tooling and machinery, double space in the plant for these machines and optionally for storing the parts, supplemental assembling machinery, and more time to produce a finished dosing cap.

A third solution consists in molding the cap in a one step injection molding process, by using a collapsible core which molds all the innersurfaces of the dosing cylinder, i.e. both the bottom portion, and also the top portion which has a greater internal diameter. At the end of the injection molding cycle, the core retracts, so that its undercut portion can be ejected through the bottom part of the dosing cylinder which has a restricted diameter. A major disadvantage in molding a dosing cap with undercut using collapsible cores, is that these collapsible cores are very fragile, they are worn out very easily, and thus, they must be changed frequently. Of course, this dramatically increases the production costs since such collapsible cores are expensive, and also because the production must be stopped each time the core needs to be changed, and the cycle times are longer.

It is therefore one main object of the present invention to provide a cap with high dosing volume, which is not too high, and can be made in a cheap way.

It is another object of the present invention to provide a process for molding such a cap, which is a single step injection molding process without collapsible core, hence its low cost.

### Summary of the invention

The present invention is directed to a one-piece dosing cap (1) comprising a top wall (13), side walls (20) defining the top portion (15) of a dosing compartment (10), and an attaching skirt (11) extending from the base of the side walls (20) and outwardly all around the periphery of a bottom portion (14), said skirt comprising substantially vertical walls and a stopping portion (21), wherein said dosing cap (10) comprises at least one undercut portion and **characterized in that** said top portion (15) and said bottom portion (14) are are molded as one unitary piece and linked by a linking portion and secured together and wherein said stopping portion (21) creates together with said top portion (15) said undercut portion. The one-piece dosing cap of the present invention is manufactured by a one-step injection molding process. Also preferably, said cap comprises attachment means for securing, more preferably releasably securing said cap onto the neck of a container. More preferably, said attachment means are achieved by screw threads, which match cooperating screw threads of the container.

### Brief description of the drawings

The invention will now be explained in detail with reference to the accompanying drawings, in which:

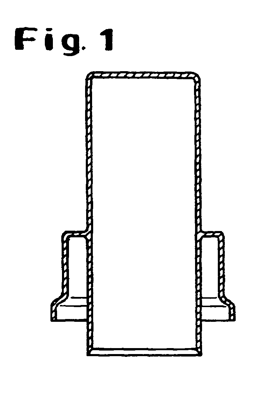

- Figure 1 is a profile cut view showing a dosing cap according to the prior art, wherein the height has been increased in order to increase the dosing volume without having an undercut.
- Figure 2A is a profile cut view of the cap according to the present invention, showing the cap in open position, as positioned in the mold during the injection molding process.
- Figure 2B is a profile cut view of the cap according to the present invention, showing the cap in closed position, as positioned in the mold at the end of the injection molding process, after both parts have been sealed to finish the cap.
- Figure 2C is a profile cut view of the cap according to the present invention, showing the cap in closed position, and secured onto the neck of a container.
- Figure 2D is a profile view showing the outside of a dosing cap according to the present invention.

### Detailed description of the invention

### The dosing cap

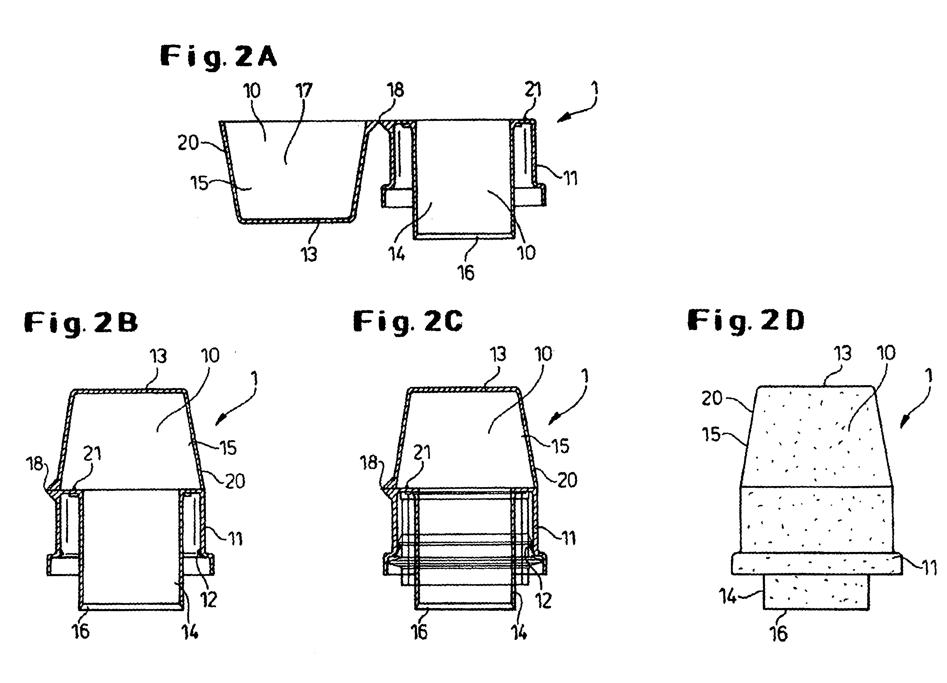

The dosing cap (1) according to the present invention comprises a top wall (13) and side walls (20) defining the top portion (15) of a dosing compartment (10). The dosing cap (1) further comprises an attaching skirt (11) with attachment means (12) which extends downwardly from the base of the side walls (20), as shown for example in figure 2B. The skirt (11) comprises substantially vertical walls with attachment means (12).

It is an essential feature of the present invention that said attaching skirt (11) comprises a stopping portion (21) extending inwardly to the inside of the cap, thus partially closing the top portion (15) of the dosing compartment (10). This stopping portion (21) is substantially horizontal, is rigid, and has such a surface that it creates at least one undercut portion (21) together with the top portion (15) of the dosing compartment (10). The role of such a stopping portion (21) is to stop the cap in the right position when closing the neck of a corresponding container, by contacting the top edge of the neck of said container, as shown for example in figure 2C. This is especially important when the cap is deep and must be attached to a short neck. The attaching skirt (11) extends outwardly all around the periphery of the bottom portion (14) of the dosing cylinder, as shown in figures 2B and 2C. Said skirt (11) comprises attachment means (12) for the cap to be secured onto the neck of a container, which are preferably located on the internal surface of the skirt (11) walls, such that once secured onto the container, the skirt (11) surrounds the neck of said container. However, the attachment means (12) can alternatively be placed onto the external surface of the skirt (11), such that the dosing cap (1) can be secured onto the neck of a container having internal cooperating attachment means (12). In a preferred embodiment, the attachment means (12) are achieved by one or more screw threads (12). Alternatively, the attachment means (12) are achieved by ribs and/or grooves which, together with cooperating ribs and/or grooves of the container neck, constitute clipping or bayonet attachment means (12).

The dosing cap (1) can have any suitable shape, but in the following description, only the preferred embodiment where the cap is cylindrical - or slightly conical - will be described.

In a preferred embodiment of the invention and as shown in the attached figures, said dosing compartment (10) comprises a bottom portion (14) in addition to the top portion (15). Said bottom portion extends downwardly from the inner edges of the stopping portion (21) as shown in figure 2B. Said bottom portion (14) is open at its base so as to form a pouring spout (16). Top and bottom portions of the dosing compartment are molded as one single unitary piece, and linked by a linking portion, for example a hinge portion (18), as shown in figures 2A to 2C, so that the whole cap is made out of one single piece.

The materials suitable for making a dosing cap (1) according to the present invention include, but are not limited to thermoplastic resins, for example polyethylene or polypropylene, or elastomeric materials such as for example synthetic rubber. The dosing cap (1) can be made out of several different plastic materials, or the same plastic material into which different additives are incorporated, for example different colours.

Dosing caps according to the present invention are typically to be used for dosing of cleaning or detergent compositions for home care or fabric care products, including but not limited to soaps, laundry detergents, colour care products, dye care products, bleach or hypochlorite additives...etc. These products can have any form, as long as they are flowable enough to be dosed by using a dosing cap (1). For example they can be liquids, flakes, powders, granules, gels or a mixture thereof.

In a preferred embodiment, the dosing cap (1) comprises a means for indicating to the consumer what is the amount of product to pour into the dosing cap (1), in orderto make a complete dose. For example, this can be achieved by putting a mark (rib or groove) on the internal surface of the dosing compartment.

### The process

A dosing cap according to the present invention is made out of thermoplastic resin, or a thermoplastic elastomer. Such caps are manufactured by using an injection molding process. Such processes are well know in the art, and will not be described further in this description for clarity purposes. The dosing cap of the present invention is made out of one piece, and requires only one mold cavity for its manufacture. The injection molded process can be a mono, multi, or co-injection molding process, depending on the number of different materials that are chosen to make the cap.

Firstly, the cap is molded in open position, as shown in figure 2A, such that none of the molded parts contains an undercut. This will prevent the need for using collapsible cores which are usually worn out easily and thus quite expensive to use for large production series.

Secondly, at the end of the molding cycle, the mold opens and the cap is partially ejected. At this point in time, the cap (1) is preferably closed in the mold by pivoting the top (14) and bottom (15) portions of the dosing compartment (10) around the hinge portion (18). Techniques for folding or closing pieces in an injection mold are well known in the art. Alternatively, the cap can be ejected from the injection mold in the open position, and be closed and sealed later on the production line.

Thirdly, after having been folded and closed, the bottom (14) and top (15) portions of the dosing compartment (10) are locked together, so as to finish the cap (1). Any suitable technique for securing said top (14) and bottom (15) portions of the dosing compartment (10) can be used, as long as the cap thus formed is leaktight. This technique include, but are not limited to mechanical bounding, heat sealing, ultrasonic sealing, spin-welding, gluing with or without using an additive... etc.

From the above, it will be easily understood that one essential feature of a cap according to the present invention is that said cap is made out of one single piece, whatever the complexity of its shape, and whatever the size of the undercut created by the stopping portion (21) of the skirt.

## Claims

1. A one-piece dosing cap (1) comprising a top wall (13), side walls (20) defining the top portion (15) of a dosing compartment (10), and an attaching skirt (11) extending from the base of the side walls (20) and outwardly all around the periphery of a bottom portion (14), said skirt comprising substantially vertical walls and a stopping portion (21), wherein said dosing cap (10) comprises at least one undercut portion and wherein: said top portion (15) and said bottom portion (14) are molded as one single unitary piece and linked by a linking portion and secured together and wherein said stopping portion (21) creates together with said top portion (15) said undercut portion.

2. A cap (1) according to claim 1, wherein the bottom portion (14) extends downwardly from the inner edges of the stopping portion (21) of the attaching skirt (11).

3. A cap (1) according to claim 2, wherein said attaching skirt (11) comprises attachment means (12) for securing said cap (1) onto the neck of a container.

4. A cap (1) according to claim 3, wherein said attachment means (12) is achieved by screw threads.

5. A cap (1) according to claim 3, wherein said attachment means (12) is achieved by ribs and/or grooves of the skirt, which clip onto corresponding grooves and/or ribs of the neck of a container.

6. A cap (1) according to any of the preceding claims, which is made by a one-step injection molding process.

7. A cap (1) according to claim 6, wherein said injection-molding process is a co-injection molding process.

8. A process of making a cap (1) according to any of the preceding claims, **characterized in that** it comprises the steps of:
(i) molding a plastic cap in two halves attached by at least one portion, in open position;
(ii) ejecting said two attached halves from the injection mold;
(iii) closing said two attached halves and sealing them to make a one-piece dosing cap as described in the preceding claims.

9. A process according to claim 8, wherein the sealing of the two halves to finish the dosing cap is achieved by heat sealing.

## Patentansprüche

1. Einstückige Dosierkappe (1), eine obere Wand (13), Seitenwände (20), die den oberen Abschnitt (15) einer Dosierkammer (10) definieren, und eine Befestigungsschürze (11), die von der Basis der Seitenwände (20) und um den gesamten Umfangsrand eines unteren Abschnitts (14) herum nach außen verläuft, umfassend, wobei die Schürze im Wesentlichen vertikale Wände und einen Anschlagsabschnitt (21) aufweist, wobei die Dosierkappe (10) mindestens einen hinterschnittenen Abschnitt aufweist, und wobei der obere Abschnitt (15) und der untere Abschnitt (14) in einem Stück geformt sind und von einem Verbindungsabschnitt verbunden sind und aneinander befestigt sind, und wobei der Anschlagsabschnitt (21) zusammen mit dem oberen Abschnitt (15) den hinterschnittenen Abschnitt erzeugt.

2. Kappe (1) nach Anspruch 1, wobei sich der untere Abschnitt (14) von den Innenrändern des Anschlagabschnitts (21) der Befestigungsschürze (11) nach unten erstreckt.

3. Kappe (1) nach Anspruch 2, wobei die Befestigungsscbürze (11) ein Befestigungsmittel (12) zum Sichern der Kappe (1) auf dem Hals eines Behälters umfasst.

4. Kappe (1) nach Anspruch 3, wobei das Befestigungsmittel (12) durch Sehraubwindungen verwirklicht ist.

5. Kappe (1) nach Anspruch 3, wobei das Befestigullgsmittel (12) durch Rippen und/oder Rillen der Schürze verwirklicht ist, die mit entsprechenden Rillen und/oder Rippen des Halses eines Behälters verklemmt werden.

6. Kappe (1) nach einem der vorstehenden Ansprüche, die durch ein einstufiges Spritzgießverfahren hergestellt wird.

7. Kappe (1) nach Anspruch 6, wobei das Spritzgießverfahren ein Co-Spritzgießverfahren ist.

8. Verfahren zum Herstellen einer Kappe (1) nach einem der vorstehenden Ansprüche, **dadurch gekennzeichnet, dass** es folgende Schritte umfasst:
(i) Formen einer Kunststoffkappe in zwei Hälften, die durch mindestens einen Abschnitt miteinander verbunden sind, in einer offenen Stellung;
(ii) Ausstoßen der beiden miteinander verbundenen Hälften aus der Spritzgießform;
(iii) Schließen der zwei miteinander verbundenen Hälften und Vensiegeln derselben, um aus ihnen eine einstückige Dosierkappe wie in den vorstehenden Ansprüchen beschrieben herzustellen.

9. Verfahren nach Anspruch 8, wobei das Verschweißen der zwei Hälften zum Fertigstellen der Dosierkappe durch Heißsiegeln erreicht wird.

## Revendications

1. Coiffe de dosage monobloc (1) comprenant une paroi supérieure (13), des parois latérales (20) définissant la partie supérieure (15) d'un compartiment de dosage (10), et une jupe de fixation (11) s'étendant de la base des parois latérales (20) et vers l'extérieur tout autour de la périphérie d'une partie inférieure (14), ladite jupe comprenant des parois essentiellement verticales et une partie d'arrêt (21), où ladite coiffe de dosage (10) comprend au moins une partie en contre-dépouille et dans laquelle : ladite partie supérieure (15) et ladite partie inférieure (14) sont moulées en une seule pièce d'un seul tenant et liées par une partie de liaison et fixées ensemble et dans laquelle ladite partie d'arrêt (21) crée conjointement avec ladite partie supérieure (15) ladite partie en contre-dépouille.

2. Coiffe (1) selon la revendication 1, dans laquelle la partie inférieure (14) s'étend vers le bas à partir des bords internes de la partie d'arrêt (21) de la jupe de fixation (11).

3. Coiffe (1) selon la revendication 2, dans laquelle ladite jupe de fixation (11) comprend un moyen de fixation (12) pour fixer ladite coiffe (1) sur le goulot d'un récipient.

4. Coiffe (1) selon la revendication 3, dans laquelle ledit moyen de fixation (12) est obtenu par des Filetages de vis.

5. Coiffe (1) selon la revendication 3, dans laquelle ledit moyen de fixation (12) est obtenu par des nervures et/ou rainures de la jupe, qui s'attachent sur des rainures et/ou nervures correspondantes du goulot d'un récipient.

6. Coiffe (1) selon l'une quelconque des revendications précédentes, qui est fabriquée par un procédé de moulage par injection en une étape.

7. Coiffe (1) selon la revendication 6, dans laquelle ledit procédé de moulage par injection est un procédé de moulage par co-ivjection,

8. Procédé de fabrication d'une coiffe (1) selon l'une quelconque des revendications précédentes, **caractérisé en ce qu'**il comprend les étapes consistant à :
(i) mouler une coiffe en plastique en deux moitiés fixées par au moins une partie, en position ouverte ;
(ii) éjecter lesdites deux moitiés fixées du moule d'injection ;
(iii) fermer lesdites deux moitiés fixées et les sceller pour fabriquer une coiffe de dosage monobloc telle que décrite dans les revendications précédentes.

9. Procédé selon la revendication 8, dans lequel le scellage des deux moitiés pour finir la coi ffe de dosage est obtenu par thermoscellage.
